# EUROPEAN PATENT APPLICATION

(11) **EP 4 642 011 A1**
(43) Date of publication of application: **29.10.2025**
(21) Application number: 23907329.9
(22) Date of filing: 06.10.2023
(51) Int. Cl.: H04L 67/131, G06Q 50/10

(54) **XR AUTHORING TOOL FRAMEWORK APPARATUS AND METHOD**

(30) Priority: 22.12.2022 KR 20220181606
(71) Applicant: Korea Electronics Technology Institute, Bundang-gu, Seongnam-si Gyeonggi-do 13509 (KR)
(72) Inventor: YANG, Yoon Mo, Goyang-si, Gyeonggi-do 10592 (KR); CHOI, Kwang Soon, Goyang-si, Gyeonggi-do 10417 (KR); YEOM, Ji Woon, Hwaseong-si, Gyeonggi-do 18478 (KR); SON, Ye Seul, Seoul 03505 (KR)
(74) Representative: Isarpatent
(86) International application number: PCT/KR2023/015389
(87) International publication number: WO 2024/136043

(57) **Abstract**

Provided are an XR authoring tool framework apparatus and method. An XR authoring tool framework according to an embodiment of the present invention provides: an XR device on which a platform supporting an authoring tool is mounted; an XR device on which a platform not supporting an authoring tool is mounted; and an authoring tool for generating an XR service for an XR device on which a platform is not mounted. Accordingly, an XR service can be manufactured without being subordinate to a platform, data transmission or reception and external authoring function usage are enabled through an interface standardized to a sensor or module attached to an XR device, and various data formats can be supported.

## Description

### Technical Field

The disclosure relates to an extended reality (XR) (virtual reality (VR)/augmented reality (AR)/mixed reality (MR)) authoring tool framework, and more particularly, to an authoring tool framework which is capable of supporting various XR devices and platforms and developing customized services.

### Background Art

A related-art XR authoring tool may only produce and distribute services through a platform that is specified by a manufacturer of an XR device and an authoring tool that is distributed by the manufacturer. Therefore, if the XR device of the manufacturer is not provided, the authoring tool provided by the manufacturer cannot be used, so that there are limitations of platform dependency.

In addition, when creating services, the authoring tool provided by the manufacturer may only input and output data through a specific data format that is supported by the authoring tool, and has the demerit that it cannot use a new authoring function beyond the content authoring function supported by the authoring tool.

These technical limitations may contribute to increased development costs and difficulty in producing and distributing XR services.

### Disclosure

### Technical Problem

The disclosure has been developed to solve the above-described problems, and an object of the disclosure is to reduce development costs and difficulty by enabling an authoring tool to acquire and process various sensor data acquired through various types of XR devices, as a solution to support various XR devices and platforms in producing and distributing services through an XR authoring tool.

### Technical Solution

According to an embodiment of the disclosure to achieve the above-described object, an XR authoring tool providing method may include: a first providing step of providing, by an XR authoring tool framework, an authoring tool for creating XR services to a first XR device equipped with a platform that supports a first authoring tool; and a second providing step of providing, by the XR authoring tool framework, the authoring tool for creating XR services to a second XR device equipped with a platform that does not support the first authoring tool.

Services created by the first authoring tool may be run in the first XR device and may not be run in the second XR device.

The first authoring tool may be an authoring tool that is distributed by a manufacturer of the first XR device or a provider of the platform mounted on the first XR device.

According to the disclosure, the XR authoring tool providing method may further include a third providing step of providing, by the XR authoring tool framework, the authoring tool for creating XR service to a third XR device that is not equipped with a platform.

The first providing step may include transmitting and receiving data that is needed to create XR services to and from the first XR device through the first authoring tool and the platform.

The second providing step may include transmitting and receiving data that is needed to create XR services to and from the second XR device through the platform.

The third providing step may include directly transmitting and receiving data that is needed to create XR services to and from the third XR device.

The XR authoring tool framework may support use of an authoring function that the XR authoring tool framework owns, generation and use of a new authoring function, and use of an authoring function of the first authoring tool.

The XR authoring tool framework may be configured to: when data received from an XR device does not follow a defined standard, convert the data into data of a defined standard and process the data; and, when a standard that an XR device uses in transmitting data from the XR device is not a defined standard, convert data of the defined standard into a standard that the XR device uses, and transmit the data.

According to another aspect of the disclosure, there is provided an XR authoring tool framework server including: a communication unit configured to communicatively connect with a first XR device equipped with a platform that supports a first authoring tool and a second XR device equipped with a platform that does not support the first authoring tool; a processor configured to provide an authoring tool for creating XR services to the first XR device and the second XR device through the communication unit; and a storage unit configured to provide a storage space that is needed for the processor.

According to still another aspect of the disclosure, there is provided an XR authoring tool providing method including: a first providing step of providing, by an XR authoring tool framework, an authoring tool for creating XR services to a first XR device equipped with a platform that supports a first authoring tool; and a second providing step of providing, by the XR authoring tool framework, the authoring tool for creating XR services to a second XR device that does not have a platform.

According to yet another aspect of the disclosure, there is provided an XR authoring tool framework server including: a communication unit configured to communicatively connect with a first XR device equipped with a platform that supports a first authoring tool and a second XR device that is not equipped with a platform; a processor configured to provide an authoring tool for creating XR services to the first XR device and the second XR device through the communication unit; and a storage unit configured to provide a storage space that is needed for the processor.

### Advantageous Effects

As described above, according to embodiments of the disclosure, XR services may be created without being subordinate to platforms, and data exchange and use of an external authoring function may be enabled through a sensor or module attached to an XR device and a standardized interface, and various data formats may be supported.

### Description of Drawings

FIG. 1 is a view provided to explain an XR authoring tool framework according to an embodiment of the disclosure.
FIG. 2 is a view provided to explain an authoring function interface of the XR authoring tool framework.
FIG. 3 is a view provided to explain a data format conversion function of the XR authoring tool framework.
FIG. 4 is a view illustrating a configuration of an XR authoring tool framework server.

### Best Mode

Hereinafter, the disclosure will be described in more detail with reference to the drawings.

When services are created using an XR device, it is common to produce and distribute services using an authoring tool provided by the manufacturer of the XR device. However, the authoring tool provided by the manufacturer is only operated on a limited platform such as a specific operating system (OS) defined by the manufacturer, and created services are only run in the XR device distributed by the manufacturer. Therefore, there are limitations to creating services using XR devices.

For example, an XR device that is based on the Android OS has to use the XR authoring tool distributed by Google, ARCore, to produce services. That is, current XR devices have an ecosystem that is limited to environments where authoring tools are supported.

Accordingly, embodiments of the disclosure present an XR authoring tool framework that is operated independently without being subordinate to a specific platform or XR device, and enables an authoring tool to produce services using an XR device.

The XR authoring tool framework according to an embodiment of the disclosure may directly or indirectly process data that is acquired through a sensor or a module attached to an XR device, may support an interface through which an authoring tool function and a new authoring function are compatible, and may support an input/output data format that is compatible with data in various formats.

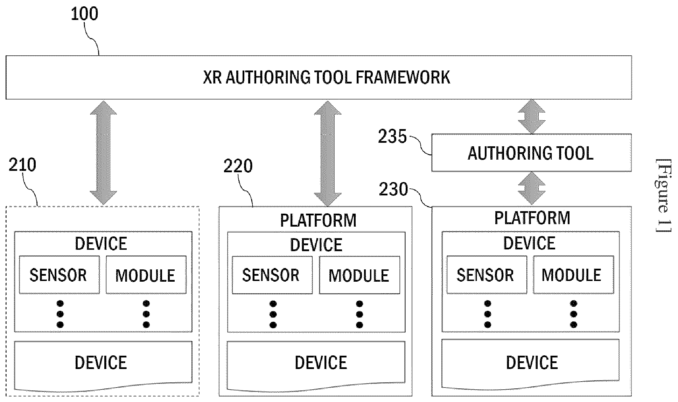

FIG. 1 is a view provided to explain an XR authoring tool framework according to an embodiment of the disclosure.

In FIG. 1, an authoring tool 235 may be a tool that is distributed by the manufacturer of an XR device 230 or a provider of a platform mounted on the XR device 230, and XR services created by the authoring tool 235 may be run in the XR device 230 equipped with the platform that supports the authoring tool 235, but may not be run in XR devices 210, 220 that do not have the corresponding platform.

On the other hand, the XR authoring tool framework 100 according to an embodiment of the disclosure may have no dependence on platforms as shown in the drawing, and hence, may be compatible with various XR devices. Specifically, as shown in FIG. 1, the XR authoring tool framework 100 according to an embodiment of the disclosure is capable of providing an authoring tool for creating XR services to all of the XR device 210 that does not have a platform, the XR device 220 equipped with a platform that does not have a supportable authoring tool, and the XR device 230 equipped with the platform that supports the authoring tool 235.

To provide the function of being compatible with the XR devices 210, 220, 230 without being subordinate to platforms, the XR authoring tool framework 100 may provide an interface that enables communication through standardized communication standards and performs the operations of:
1) for the XR device 210 that does not have the platform, directly transmitting and receiving data needed to create XR services through standardized communication standards such as UART, I2C, SPI, etc.;
2) for the XR device 220 equipped with the platform that does not have the supportable authoring tool, transmitting and receiving data needed to create XR services through the platform; and
3) for the XR device 230 equipped with the platform that supports the authoring tool 235, transmitting and receiving data needed to create XR services through the authoring tool 235 and the platform.

The Microsoft HoloLnes uses the function of its authoring tool, MRTK, on its platform, Windows, to acquire data from devices, and process the data and create services. Since MRTK is used to acquire data, there are limitations that it does not acquire data from a sensor and a module attached to a device if the sensor and the module are not vendors authorized by MRTK.

On the other hand, the XR authoring tool framework 100 according to an embodiment of the disclosure is not subordinate to authoring tools or platforms, and is able to directly transmit and receive data of a sensor and a module attached to an XR device in various methods (for example, directly from the XR device, through a platform, through an authoring tool and a platform), and hence, enables development of XR services irrespective of XR devices.

Meanwhile, the authoring tools provided by the manufacturers of existing XR devices and specific platforms are designed to create services by using functions that they provide. Accordingly, there are limitations to adding new functions by using other tools (for example, Unity and authoring tools) to create or add new functions.

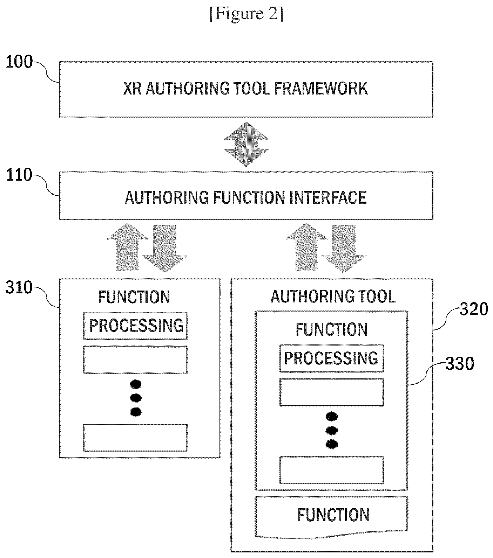

On the other hand, as shown on the left of FIG. 2, the XR authoring tool framework 100 according to an embodiment of the disclosure may provide a standardized authoring function interface 110 to enable users of XR devices to utilize an authoring function 310 owned/provided by the XR authoring tool framework 100, and to create and utilize a new authoring function 310.

Furthermore, as shown on the right of FIG. 2, the XR authoring tool framework 100 according to an embodiment of the disclosure may enable users to utilize an authoring function 330 that is included in an authoring tool 320 provided by existing manufacturers or platform providers.

For example, when a navigation service is to be provided based on inertial measurement unit (IMU) data acquired through an XR device and image data acquired through a camera, a certain function may be used by following the authoring function interface 110 defined by the XR authoring tool framework 100 to make Simultaneous Localization and Mapping (SLAM) made by a service provider compatible.

Furthermore, the XR authoring tool framework 100 according to an embodiment of the disclosure may provide standards that cover various input and output data formats so that services may be created by using external data in various formats acquired not only from various XR devices but also from servers.

For example, since Microsoft's MRTK does not support the format in Standard Triangle Language (STL) which is one of three-dimensional data formats, it has limitations that data may only be used after being converted into other data formats.

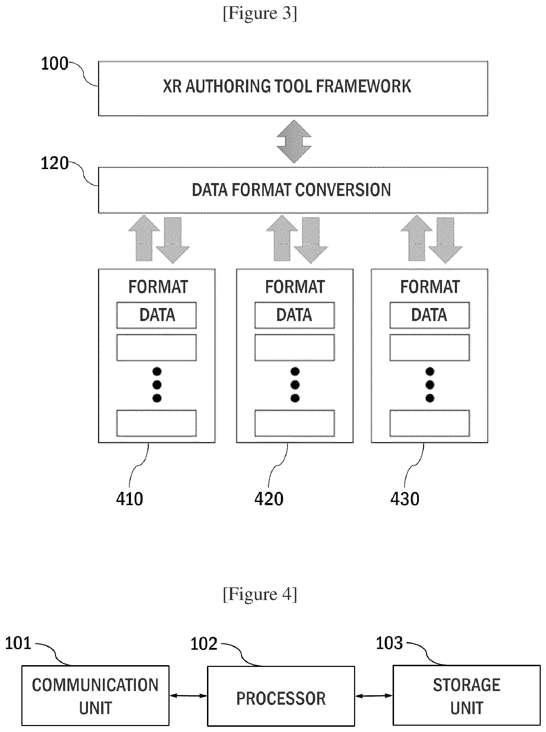

On the other hand, as shown in FIG. 3, the XR authoring framework 300 according to an embodiment of the disclosure may provide a data format conversion function 120 to convert formats of external data 410, 420, 430 into standardized data formats if they are not standardized data formats, and to process, and may convert the standardized formats into original formats when returning the data and may transfer the data.

Data that is converted into standardized formats may be visualized through various user interfaces (UIs) such as XR glasses or projectors, and may be converted back to common formats after being processed and may be output to the outside. For example, data that is transmitted from equipment or sensors in a factor or an industrial site may be converted into a standardized format, and then, may be used for creating a service that is displayed in real time.

Up to now, the XR authoring tool framework apparatus and method have been described in detail with reference to preferred embodiments.

In the above embodiments, to support various XR devices and platforms when producing and distributing services through an XR authoring tool, the authoring tool may be enabled to acquire and process various sensor data acquired through various kinds of XR devices, so that development costs and difficulty may be reduced.

Accordingly, XR services may be created without being subordinate to platforms, and data exchange may be enabled by using a sensor or module attached to an XR device and a standardized interface, and an external authoring function may be used through a standardized interface, and various data formats may be supported.

The XR authoring tool framework according to an embodiment of the disclosure may be implemented by hardware or software.

FIG. 4 is a view illustrating a configuration of an XR authoring tool framework server. As shown in FIG. 4, the XR authoring tool framework server may include a communication unit 101 a processor 102, and a storage unit 103.

The communication unit 101 may be a means for communicatively connecting with XR devices 210, 220, 230 and external servers, and the processor 102 may perform the functions of the XR authoring tool framework presented through FIGS. 1 to 3 described above, and the storage unit 103 may provide a storage space that is needed for the processor 120 to operate and perform functions.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. An XR authoring tool providing method comprising:
a first providing step of providing, by an XR authoring tool framework, an authoring tool for creating XR services to a first XR device equipped with a platform that supports a first authoring tool; and
a second providing step of providing, by the XR authoring tool framework, the authoring tool for creating XR services to a second XR device equipped with a platform that does not support the first authoring tool.

2. The XR authoring tool providing method of claim 1, wherein services created by the first authoring tool are run in the first XR device and are not run in the second XR device.

3. The XR authoring tool providing method of claim 2, wherein the first authoring tool is an authoring tool that is distributed by a manufacturer of the first XR device or a provider of the platform mounted on the first XR device.

4. The XR authoring tool providing method of claim 1, further comprising a third providing step of providing, by the XR authoring tool framework, the authoring tool for creating XR service to a third XR device that is not equipped with a platform.

5. The XR authoring tool providing method of claim 4, wherein the first providing step comprises transmitting and receiving data that is needed to create XR services to and from the first XR device through the first authoring tool and the platform.

6. The XR authoring tool providing method of claim 5, wherein the second providing step comprises transmitting and receiving data that is needed to create XR services to and from the second XR device through the platform.

7. The XR authoring tool providing method of claim 6, wherein the third providing step comprises directly transmitting and receiving data that is needed to create XR services to and from the third XR device.

8. The XR authoring tool providing method of claim 1, wherein the XR authoring tool framework supports use of an authoring function that the XR authoring tool framework owns, generation and use of a new authoring function, and use of an authoring function of the first authoring tool.

9. The XR authoring tool providing method of claim 1, wherein the XR authoring tool framework is configured to:
when data received from an XR device does not follow a defined standard, convert the data into data of a defined standard and process the data; and
when a standard that an XR device uses in transmitting data from the XR device is not a defined standard, convert data of the defined standard into a standard that the XR device uses, and transmit the data.

10. An XR authoring tool framework server comprising:
a communication unit configured to communicatively connect with a first XR device equipped with a platform that supports a first authoring tool and a second XR device equipped with a platform that does not support the first authoring tool;
a processor configured to provide an authoring tool for creating XR services to the first XR device and the second XR device through the communication unit; and
a storage unit configured to provide a storage space that is needed for the processor.

11. An XR authoring tool providing method comprising:
a first providing step of providing, by an XR authoring tool framework, an authoring tool for creating XR services to a first XR device equipped with a platform that supports a first authoring tool; and
a second providing step of providing, by the XR authoring tool framework, the authoring tool for creating XR services to a second XR device that does not have a platform.

12. An XR authoring tool framework server comprising:
a communication unit configured to communicatively connect with a first XR device equipped with a platform that supports a first authoring tool and a second XR device that is not equipped with a platform;
a processor configured to provide an authoring tool for creating XR services to the first XR device and the second XR device through the communication unit; and
a storage unit configured to provide a storage space that is needed for the processor.
